# EUROPEAN PATENT APPLICATION

(11) **EP 1 747 952 A1**
(43) Date of publication of application: **31.01.2007**
(21) Application number: 06013372.5
(22) Date of filing: 28.06.2006
(51) Int. Cl.: B60R 21/237, B60R 21/233

(54) **Airbag device**

(30) Priority: 25.07.2005 JP 2005214520
(71) Applicant: TAKATA CORPORATION, Minato-ku, Tokyo 106-8510 (JP)
(72) Inventor: Hasebe, Masahiro, Takata Corporation, Minato-ku Tokyo 106-8510 (JP); Narimoto, Yukitoshi, Takata Corporation, Minato-ku Tokyo 106-8510 (JP)
(74) Representative: Vossius & Partner

(57) **Abstract**

An airbag device is provided which is made by folding an airbag having a left airbag section and a right airbag section with a new folding method. An airbag 10 includes a left airbag section 12 and a right airbag section 14 that are inflated on the left and right, respectively, in front of a passenger, and a base chamber 16 that communicates base ends of the airbag sections with each other. When the airbag 10 is folded, first, the left airbag section 12 and the right airbag section 14 are primarily folded so as to have a reduced vertical width, thereby forming primary folded bodies that are elongated in forward and rearward directions. Then, the primary folded bodies are folded so as to have a reduced longitudinal width, thereby forming a secondary folded body. Thereafter, the base chamber 16 is flattened and the secondary bodies are placed on the base chamber. At this time, a rear end 16r of the base chamber 16 is pulled out rearwardly and overlapped with the lateral faces of the secondary bodies opposite to the passenger (Fig. 15).

## Description

The present invention relates to an airbag device including an airbag that is inflated at the time of a vehicle collision to receive a passenger, and more specifically, it relates to an airbag device including an airbag having a left airbag section and a right airbag section that are inflated on the right and left, respectively, in front of a passenger.

JP-A-2004-268903 (Patent Document 1) discloses an airbag for receiving a passenger at the time of a vehicle collision and a folding method thereof in which the airbag has a left airbag section and a right airbag section that are inflated on the right and left, respectively, in front of a passenger and is adapted to be inflated by an inflator common to the airbag sections. In the airbag disclosed in the publication, the left airbag section and the right airbag section are not connected to each other, and middle portions of the airbag sections in the fore-and-aft direction thereof are connected by a connecting part.

In the above publication, portions of the airbag sections closer to their leading ends than the connecting part are folded along vertical folding lines, respectively, so as to be primary folded bodies, and then, the primary folded bodies are folded to be smaller.

This airbag is folded and accommodated within a case and covered with a cover. When the inflator (gas generator) begins to discharge gas at the time of a vehicle collision, the airbag is inflated toward the front of a passenger while pushing the cover open.

Accordingly, the object of the present invention is to provide an airbag device made by folding an airbag having a left airbag section and a right airbag section with a folding method different from that disclosed in JP-A-2004-268903.

An airbag device according to Claim 1 includes a folded airbag, a case accommodating the airbag, and an inflator for inflating the airbag. The airbag on a leading-end side is inflated in a direction away from a base-end side of the airbag by gas discharged from the inflator disposed on the base-end side. The airbag includes a base end part having a gas introducing port that receives gas from the inflator, a left airbag section that is connected to the base end part and inflated on the left in front of a passenger, and a right airbag section that is connected to the base end part and inflated on the right in front of the passenger. The airbag is made by primarily folding the left airbag section and the right airbag section to form primary folded bodies that are elongated in forward and rearward directions, by secondarily folding the primary folded bodies so as to have a reduced longitudinal width to form a secondary folded body, and then by folding the base end part. A portion of the base end part on the side opposite to the passenger is pulled out in a direction opposite to the passenger farther than the secondary folded body and folded.

The airbag device according to Claim 2 is an airbag device according to Claim 1 in which a portion of the base end part on the passenger side is pulled out toward the passenger from the secondary folded body and folded, and in which the pulled-out distance in the direction opposite to the passenger is larger than the pulled-out distance toward the passenger.

The airbag device according to Claim 3 is an airbag device according to Claim 1 or 2 in which the left airbag section and the right airbag section have leading ends non-connected to each other, whereby a space to be opened toward the passenger is formed between the leading ends of the left airbag section and the right airbag section when inflated, and in which middle portions of the left airbag section and the right airbag section in their inflation direction are connected to each other by a connecting part.

In the airbag device according to the invention, when the inflator operates to inflate the airbag, the gas from the inflator is introduced into the base end part of the airbag through the gas introducing port to inflate the base end part first. Next, the gas is introduced into the left airbag section and the right airbag section to inflate them. The inflated left airbag section receives the left chest of a passenger and the inflated right airbag section receives the right chest of the passenger. Hard and strong ribs exist in the left and right chests. The airbag receives and absorbs an impact on the passenger through the ribs.

Further, in the invention, in a state in which the airbag is inflated, if the spacing between the front most ends of the left airbag section and the right airbag section is 150 to 450 mm, the inflated left airbag section directly faces a central region of the left chest, and the inflated right airbag section directly faces a central region of the right chest. As a result, the region of the ribs of the upper half of the passenger's body is reliably and securely received by the airbag.

In the invention, the airbag is made by primarily folding the left airbag section and the right airbag section to form primary folded bodies that are elongated in forward and rearward directions, by secondarily folding the primary folded bodies so as to have a reduced longitudinal width to form a secondary folded body, and then by folding the base end part. A portion of the base end part opposite to the passenger is pulled out and folded in a direction opposite to the passenger farther than the secondary folded body.

Therefore, when the base end part is inflated, the base end part expands greatly on the side opposite to the passenger farther than the secondary folded body. Thereby, the secondary folded body is pushed out toward the passenger by the inflated base end part so that the left airbag section and the right airbag section are smoothly deployed toward the passenger.

As defined in Claim 2, a portion of the base end part on the passenger side is pulled out a bit toward the passenger from the secondary folded body and folded. As a result, when the base end part is inflated, the portion of the base end part on the passenger side is inflated so as to support the portion of the secondary folded body on the passenger side from the bottom.

In an aspect of Claim 3, when the airbag has been inflated, a space exists between the leading ends of the left airbag section and the right airbag section. If the passenger's body rushes into the airbag, the breastbone region of the chest does not receive reaction force too much from the airbag. As a result, a burden on the breastbones becomes small.

Further, in the aspect of Claim 3, middle portions of the left airbag section and the right airbag section in the inflation direction are connected to each other. As a result, since the left and right airbag sections pull each other in the course of inflating the airbag, the left and right airbag sections are inflated almost equally.

Hereinafter, an embodiment of the invention will be described with reference to the accompanying drawings.

Fig. 1 is a perspective view of an airbag according to an embodiment of the invention;
Fig. 2 is a horizontal sectional view of the airbag of Fig. 1;

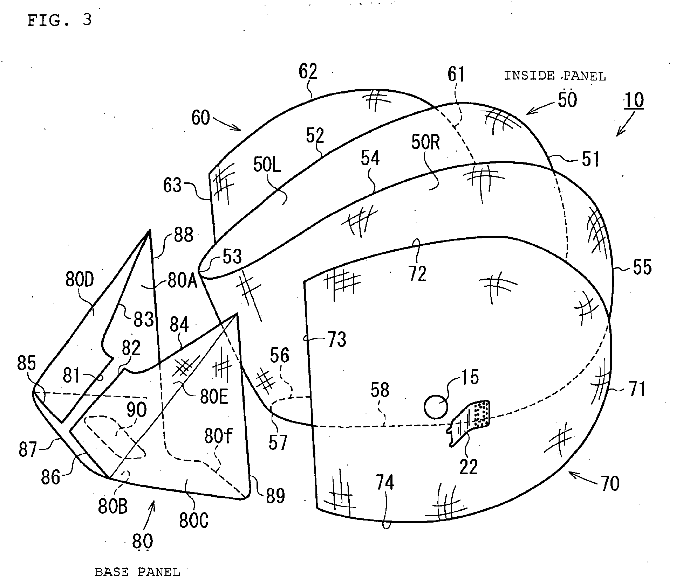

Fig. 3 is an exploded perspective view showing the structure of panels of the airbag of Fig. 1;
Fig. 4 is an exploded perspective view in the course of sewing the airbag.
Figs. 5 to 18 are explanatory views showing the process of folding the airbag of Fig.1.
Fig. 19 is a longitudinal sectional view of an airbag device including the folded airbag of Fig. 1; and
Fig. 20 is a longitudinal sectional view the airbag of the airbag device of Fig. 19 when being inflated.

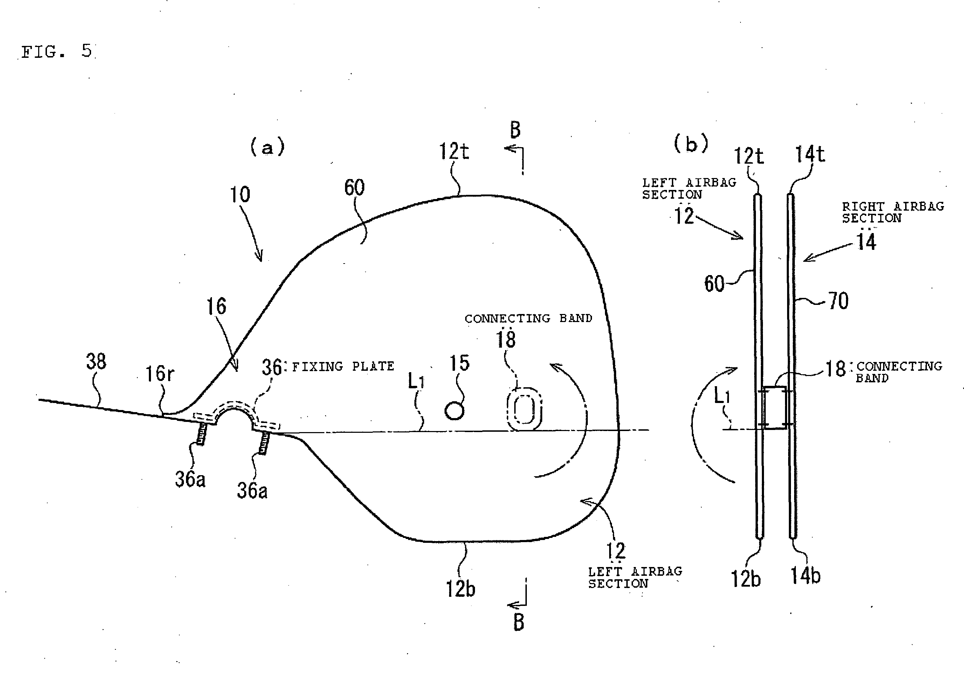

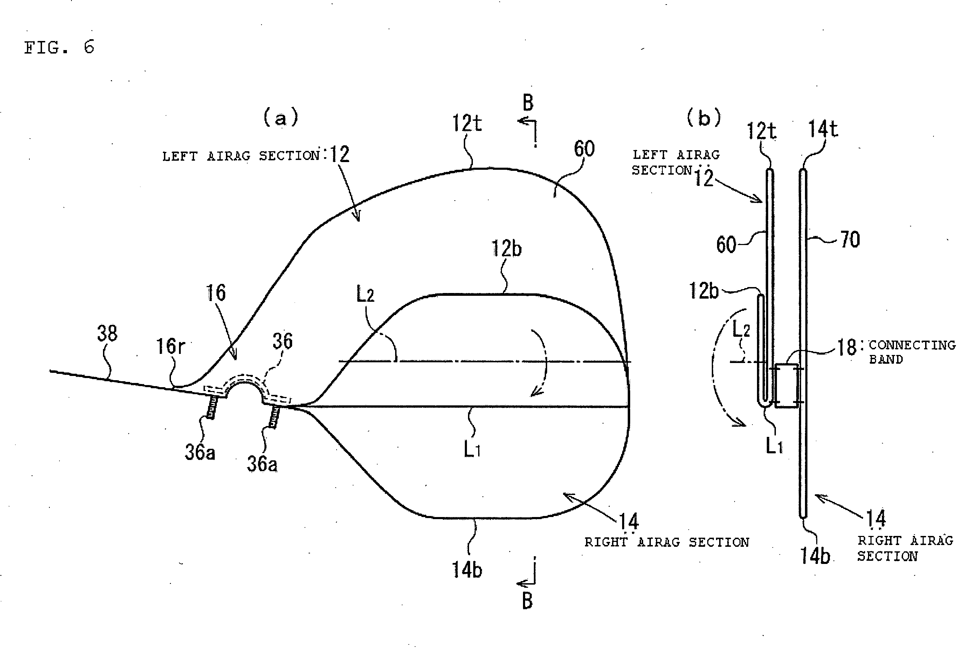

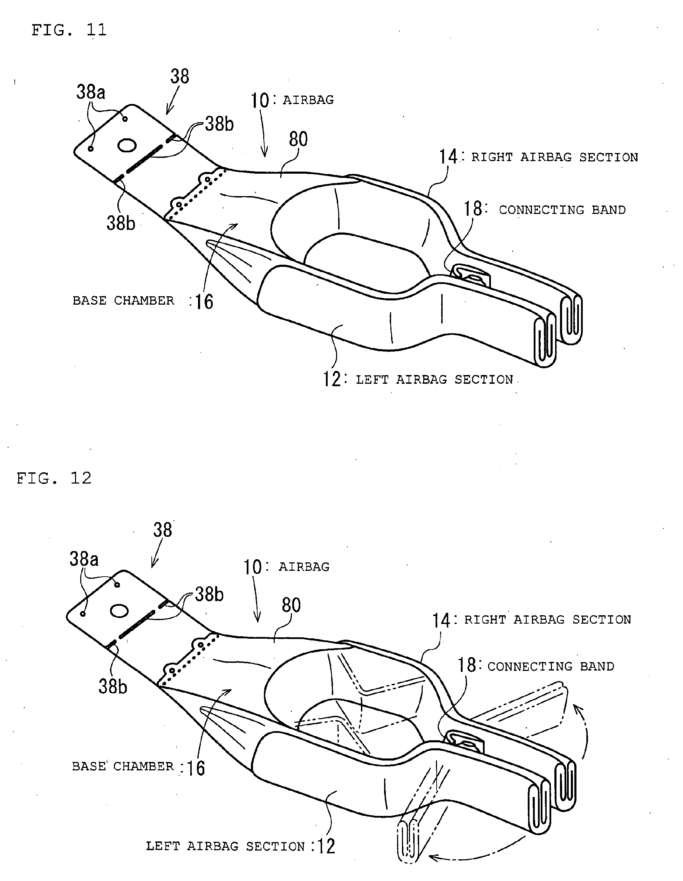

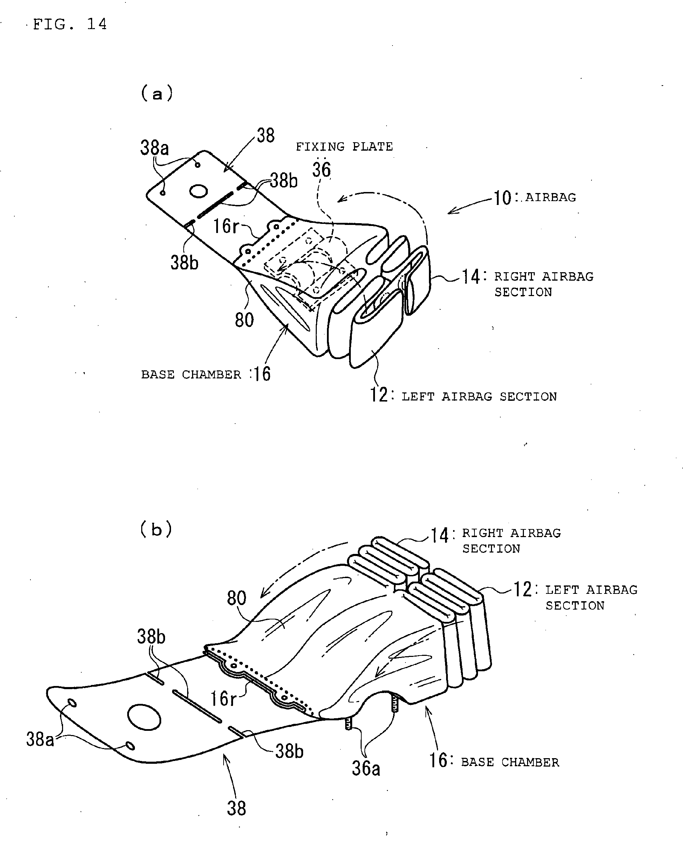

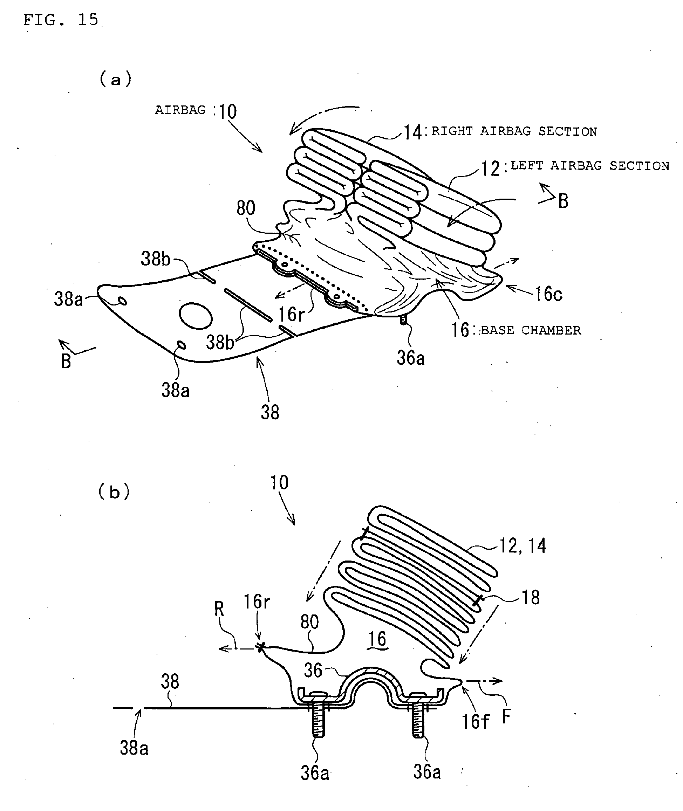

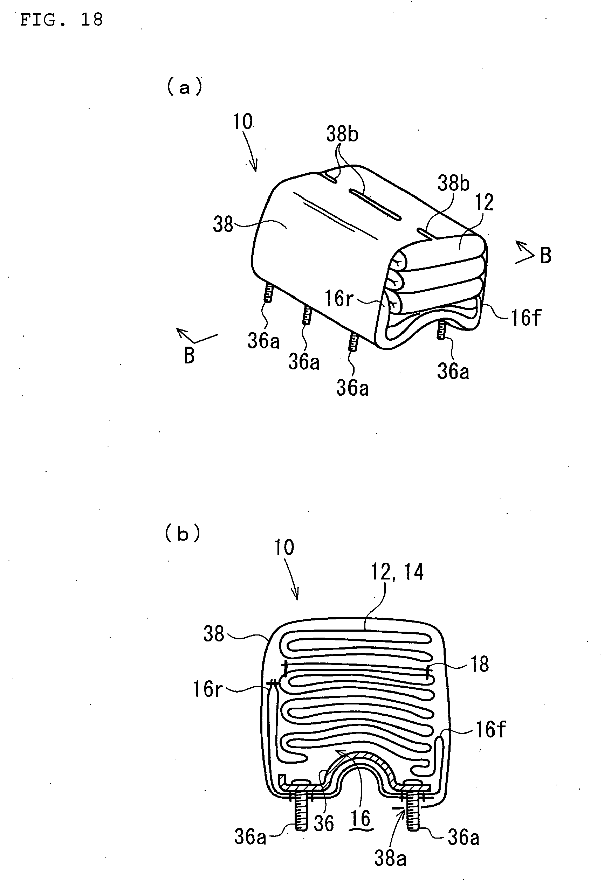

In addition, Fig. 5 shows a state of the airbag before being folded, Figs. 6 to 17 show states of the airbag while being folded, and Fig. 18 shows a state of the airbag when being completely folded. In Figs. 5 to 10, Figs. 5(a), 6(a), 7(a), 8(a), 9(a) and 10(a) are side views of the airbag, and Figs. 5(b), 6(b), 7(b), 8(b), 9(b) and 10(b) are sectional views taken along the lines B-B in Figs. 5(a), 6(a), 7(a), 8(a), 9(a) and 10(a). Figs. 11 to 13 and 14(a) are perspective views as seen from the leading side of the airbag (the passenger side), and Figs. 14(b) and Figs. 15(a), 16(a), 17(a) and 18(a) are perspective views as seen from the base end (rear end) of the airbag. Figs. 15(b), 16(b), 17(b) and 18(b) are sectional views taken along the lines B-B of Figs. 15(a), 16(a), 17(a) and 18(a).

An airbag 10 includes a left airbag section 12 that is inflated on the front left side of a passenger, a right airbag section 14 that is inflated on the front right side of the passenger, and a base chamber 16 that communicates one end of the left airbag section 12 with one end of the right airbag section 14. The base chamber 16 is the base side of the airbag 10. Accordingly, the left airbag section 12 and the right airbag section 14 are respectively inflated in a direction away from the base chamber 16.

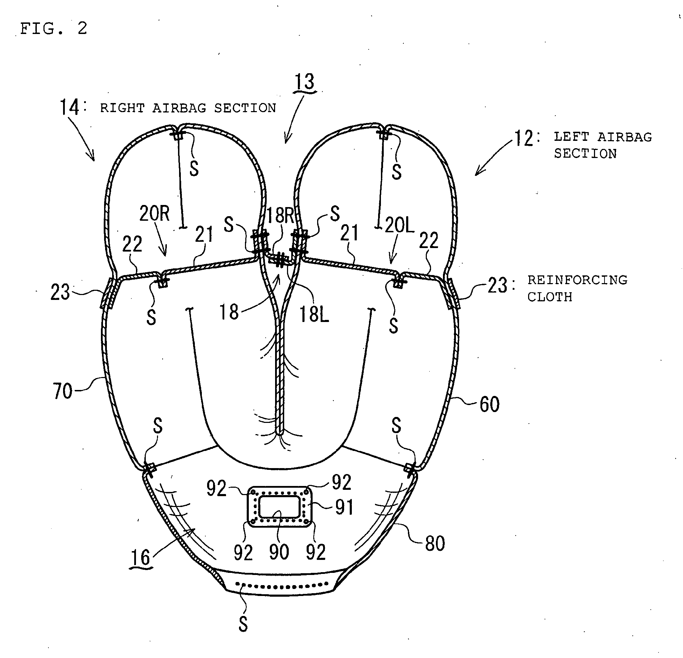

When the airbag 10 is inflated, a space 13 (Fig. 2) is formed between a front most end of the left bag 12 and a front most end of the right bag 14 without a bridging member such as a tie panel therebetween. The space 13 is opened toward the passenger (toward the upper side in Fig. 2).

When the airbag 10 is completely inflated, it is preferable that the spacing between a front most end of the left airbag section 12 and a front most end of the right airbag section 14 be 150 to 450 mm, particularly, 170 to 430 mm.

It is also preferable that the horizontal distance from one of the front most ends to a deepest portion of the space 13 be 280 to 480 mm, particularly, 310 to 450 mm. In a middle portion between the front most end to the deepest portion, the airbag sections 12 and 14 are connected to each other by a connecting band 18. In this embodiment, the connecting band 18 comprises a left half of connecting band 18L and a right half of connecting band 18R.

The outer faces of the left and right airbag sections 12 and 14 are provided with vent holes 15. Width-regulating tethers 20L and 20R (forming a tether belt or strap) that extend in the right-and-left direction are stretched within the airbag sections 12 and 14, respectively. The structure of the tethers 20L and 20R will be described later.

The panel structure, etc. of the airbag 10 will be described below. In the following description, the front side (leading side) of each panel means the leading side of the airbag 10 in the inflation direction and the rear side means the base side of the airbag in the inflation direction.

The airbag 10 comprises a total of four panels, i.e., an inside panel 50, a left outside panel 60, a right outside panel 70, and a base panel 80. Each of the left and right halves of connecting band 18L and 18R is connected to the side panel 50.

The inside panel 50 is substantially gourd-shape elongated panel. A left side 50L and a right side 50R are formed by folding the inside panel 50 into two in the middle thereof. In the inside panel 50, the left side 50L constitutes the inner face of the left airbag section 12, and the right side 50R constitutes the inner face of the right airbag section 14. The entire peripheral edge of the inside panel 50 comprises a lower edge 56, a leading edge 51 and an upper edge 52 of the left side 50L, an upper edge 53 which lies in the vicinity of a folded-back portion constituting the deepest portion between valleys of the airbag, an upper edge 54, a leading edge 55 and a lower edge 58 of the right side 50R, and a lower edge 57 which lies in the vicinity of the folded-back portion.

The entire peripheral edge of the left outside panel 60 comprises a leading edge 61, an upper edge 62, a straight rear edge 63, and a lower edge 64 (here, reference numeral 64 is not shown). The entire peripheral edge of the right outside panel 70 comprises a leading edge 71, an upper edge 72, a straight rear edge 73, and a lower edge 74.

The base panel 80 has a left lateral face 80A, a bottom face 80B, a right lateral face 80C, a left flap 80D constituting a top left side, a right flap 80E constituting a top right side. The base panel 80 is folded in such a manner that the lateral faces 80A and 80C form a substantially triangular shapes. The face of the base panel 80 that faces the leading side of the airbag is opened.

The entire peripheral edge of the base panel 80 comprises facing edges 81 and 82 between substantially rectangular flaps 80D and 80E, front edges 83 and 84 (flap front edges) of the flaps 80D and 80E, rear edges 85 and 86 of the flaps 80D and 80E, a rear edge 87 facing the rear edges 85 and 86, front edges 88 and 89 (lateral front edges) of the lateral faces 80A and 80C, and a bottom front edge 80f that connects the lateral front edges 88 and 89 with each other.

In addition, as shown in Fig. 2, the bottom face 80B of the base panel 80 is provided with a gas introducing port 90. A frame-like reinforcing cloth 91 is overlapped and sewn to the gas introducing port 90 so as to surround it. The gas introducing port 90 is rectangular, and has bolt insertion holes 92 formed in the vicinity of its four corners.

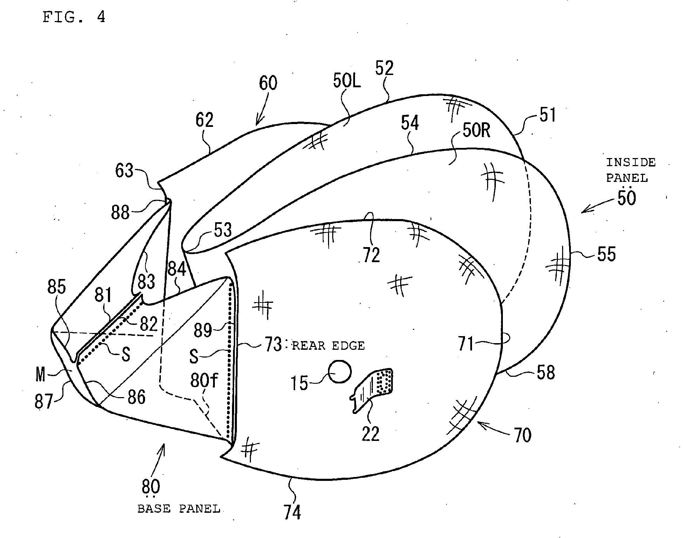

In making the airbag 10, first, the rear edge 63 of the left outside panel 60 and the rear edge 73 of the right outside edge 70 are sewn to the lateral front edges 88 and 89, respectively, in a state where the base panel 80 is spread flat. Next, the facing edges 81 and 82 of the flaps 80D and 80E of the base panel 80 are sewn together. This brings the panels 60, 70 and 80 into the state shown in Fig. 4. In addition, "S" in Fig. 4 indicates sewing seams.

Next, as shown in Fig. 4, the left outside panel 60 is caused to face the left side 50L of the inside panel 50, and the leading edges 51 and 61, the upper edges 52 and 62 and the lower edges 56 and 64 are sewn together, respectively. The right outside panel 70 is caused to face the right side 50R of the inside panel 50, and the leading edges 55 and 71, the upper edges 54 and 72 and the lower edges 58 and 74 are sewn together, respectively. Also, the flap front edges 83 and 84 of the base panel 80 are sewn to the upper edge 53 in the vicinity of the folded-back portion of the inside panel 50, and the bottom front edge 80f of the base panel 80 is sewn to the lower edge 57 in the vicinity of the folded-back portion.

In this embodiment, each of the width-regulating tethers 20L and 20R comprises a pair of tether halves 21 and 22. As shown in Fig. 2, the one tether half 21 has one end sewn on the inner face of the inside panel 50. The other tether half 22 has one end sewn on the inner face of each of the outside panels 60 and 70. Reference numeral 23 represents reinforcing cloths that are disposed across the outside panels 60 and 70 from the one ends of the tether halves 22 and are sewn together therewith.

Next, the tether half 21 attached to the left side 50L and the other end of the tether half 22 attached to the left outside panel 60 are sewn together, and the tether half 21 attached to the right side 50R and the other end of the tether half 22 attached to the right outside panel 70 are sewn together.

By sewing the other ends of the tether halves 21 and 22 together, the left side 50L and the left outside panel 60 are connected to each other by the tether 20L, and the right side 50R and the right outside panel 70 are connected to each other by the tether 20R, thereby regulating the width of the left airbag section 12 and the right airbag section 14 when they are inflated.

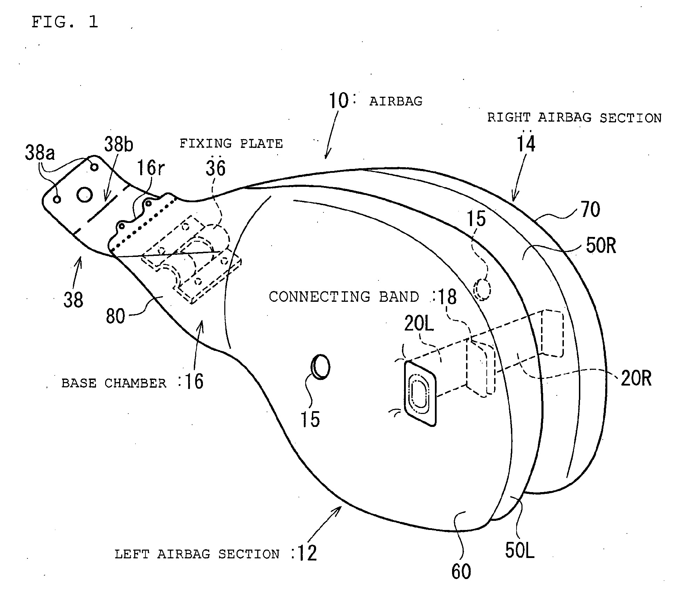

By thus sewing, the airbag 10 (shown in Fig. 1) becomes to be an inside-out state, that is, to expose a sewing thread to the surface of the airbag. As shown in Fig. 4, the flap rear edges 85 and 86 and the rear edge 87 of the base panel 80 are not yet sewn together, but they form an opening M in this state.

Consequently, the airbag is inverted through the opening M. Next, the opening M is sewn and the left and right halves of connecting band 18L and 18R are sewn together, resulting in the airbag 10 in Fig. 1.

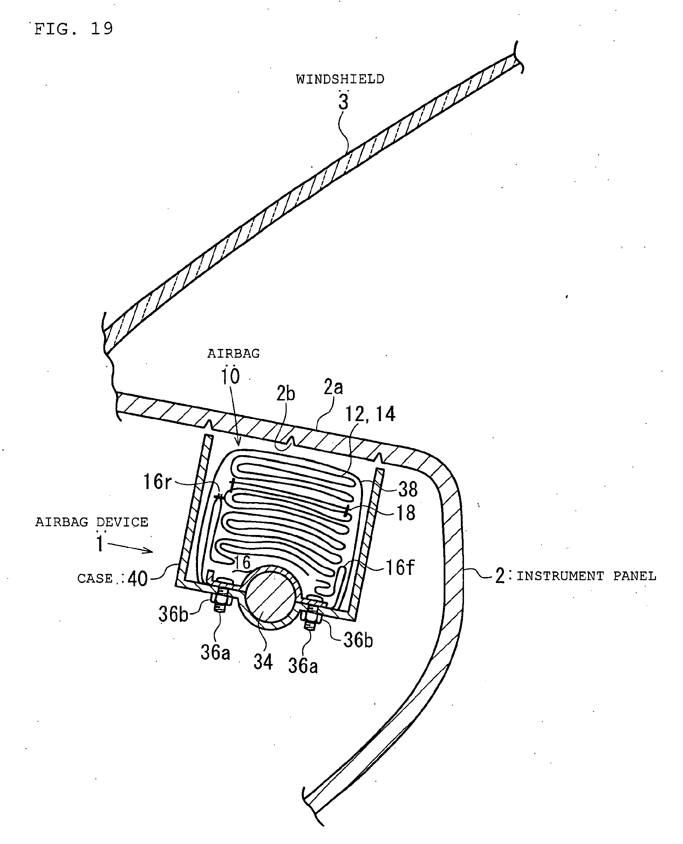

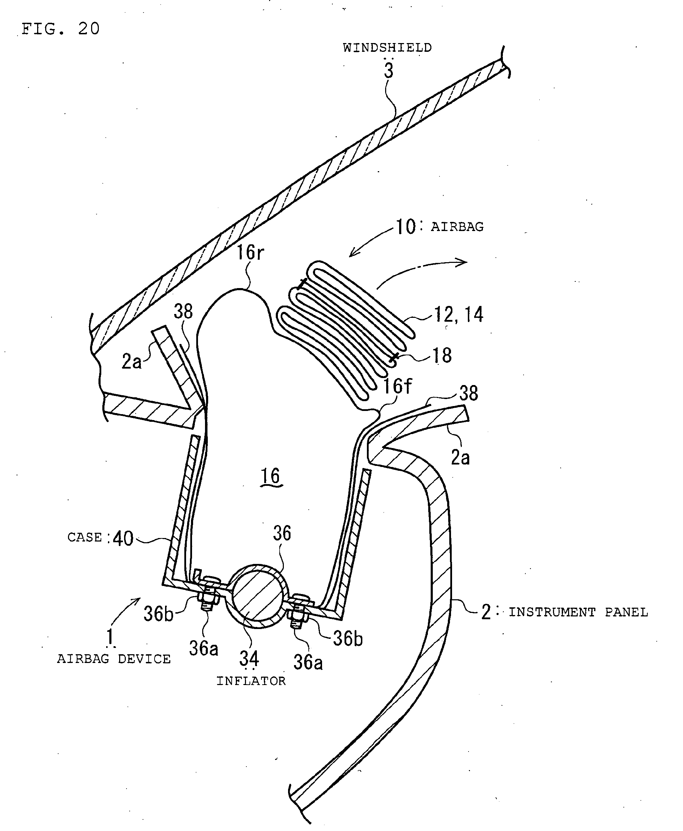

In this embodiment, an inflator 34 (see Figs. 19 and 20) is disposed within the base chamber 16 through the gas introducing port 90 at the bottom of the base chamber 16. In this embodiment, the inflator 34 is rod-shaped, and disposed such that the longitudinal direction is the width direction (the right-and-left direction) of a vehicle. Reference numeral 36 represents a fixing plate as a fixture to fix the bottom face of the base chamber 16 and the inflator 34 to an airbag mounting face of the accommodating case 40 (the bottom face of an accommodating case 40 in this embodiment) (see Figs. 19 and 20).

As shown in Fig. 1 and Figs. 15(b), 16(b), 17(b) and 18(b), the fixing plate 36 has C-shaped bands (reference numerals are omitted) fitted on peripheral sides of the inflator 34 at the longitudinal opposite ends, flanges (reference numerals are omitted) that extend along the bottom face of the base chamber 16 (and the airbag mounting face of the case 40) from both ends of the C-shaped bands, and stud bolts 36a protruding downwardly from the flanges, respectively. In addition, each flange is provided with a pawl (reference numeral is omitted) to lock the fixing plate 36 to a peripheral edge of the gas introducing port 90, and the peripheral edge of the gas introducing port 90 is provided with a locking hole (reference numeral is omitted) for the pawl.

Prior to folding of the airbag 10 that has been completely sewn, the fixing plate 36 is introduced into the base chamber 16 from the gas introducing port 90, and attached to the peripheral edge of the gas introducing port 90. At this time, the flanges of the fixing plate overlap peripheral edge of the gas introducing port 90 while the stud bolts 36a are inserted into the insertion holes 92, respectively, and the pawl of the flanges are hooked to the locking holes, respectively, thereby fixing the fixing plate 36. The stud bolts 36a extend to the outside of the airbag 10 through the insertion holes 92.

By fastening the fixing plate 36 to the airbag mounting face of the case 40 with the stud bolts 36a, the bottom face of the base chamber 16 and the inflator 34 are fixed to the airbag mounting face. Reference numeral 36b in Figs. 19 and 20 represent nuts fitted around the stud bolts 36a, respectively.

In this embodiment, a protector cloth 38 is connected to a rear end of the base chamber 16 to wrap a folded body of the airbag 10. In this embodiment, the protector cloth 38 is a band-like panel that extends rearwardly from the rear end of the base chamber 16. A base end of the protector cloth is sewn on the outer face of the airbag at the peripheral edge of the gas introducing port 90.

In addition, the base end of the protector cloth 38 is provided with an opening (not shown) overlapping the gas introducing port 90, and holes (not shown) overlapping the pawl locking holes and the stud bolts 92, respectively. The inflator 34 is disposed within the base chamber 16 through the opening of the protector cloth 38 and the gas introducing port 90. The stud bolts 36a extend to the outside of the airbag 10 through the bottom face of the base chamber 16 and the protector cloth 38.

Insertion holes 38a for the stud bolts 36a are bored in a leading end of the protector cloth 38.

The protector cloth 38 is adapted to be ruptured when it receives a predetermined tension or more in its extending direction suffered. Specifically, perforated slits 38b are formed in the extending middle portion of the protector cloth 38 so as to run in a direction intersecting the extending direction of the cloth. When the protector cloth 38 receives a predetermined tension or more, it is torn and ruptured along the slits 38b.

The airbag 10 is folded and accommodated within the case 40 along with the inflator 34, and the accommodated airbag is fixed to the airbag mounting face by the nuts 36b and the bolts 36a of the fixing plate 36, thereby forming an airbag device 1.

In addition, in this embodiment, the airbag device 1 is for a front passenger seat of a vehicle that is installed on the back of an instrument panel 2 in front of the front passenger seat. A portion of the instrument panel 2 that covers the case 40 servers as a door 2a that is pushed and torn open toward the interior of the vehicle by the airbag 10 when the airbag 10 is inflated. Reference numeral 2b in Fig. 19 represents a tear line that induces the tearing of the door 2a.

It should be noted herein that a structure may be employed in which the case 40 is mounted with a lid (case member) adapted to be pushed and torn open by the airbag 10 when the airbag 10 is inflated and the instrument panel 2 is provided with an opening for installation of the airbag device 1 so that the airbag device 1 is covered with the lid in installing the airbag device 1 into the opening.

As shown in Fig. 19, a windshield 3 exists above the instrument panel 2. The windshield inclines upward and rearward from an end of the instrument panel 2 on the front side of the vehicle.

Next, the process of folding the airbag 10 will be described with reference to Figs. 5 to 18.

In folding the airbag 10, first, the left airbag section 12 and the right airbag section 14 are spread flat such that their respective left and right lateral faces (the left side 50L and the left outside panel 60 or the right side 50R and the right outside panel 70) overlap each other. Then, as shown in Figs. 5 to 11, the left airbag section 12 and the right airbag section 14 are respectively folded so as to have a reduced vertical width, resulting in primary folded bodies that are elongated in forward and rearward directions.

In the primary folded bodies, in this embodiment, first as shown in Figs. 5 and 6, a portion of the left airbag section 12 (lower airbag section) that is lower than the connecting band 18 (the connecting band between the left airbag section 12 and the right airbag section 14) is folded back upwardly along a folding line L₁ that connects a lower edge of the connecting band 18 and a lower edge of the fixing plate 36 at the front end, and is overlapped with the left outside panel 60.

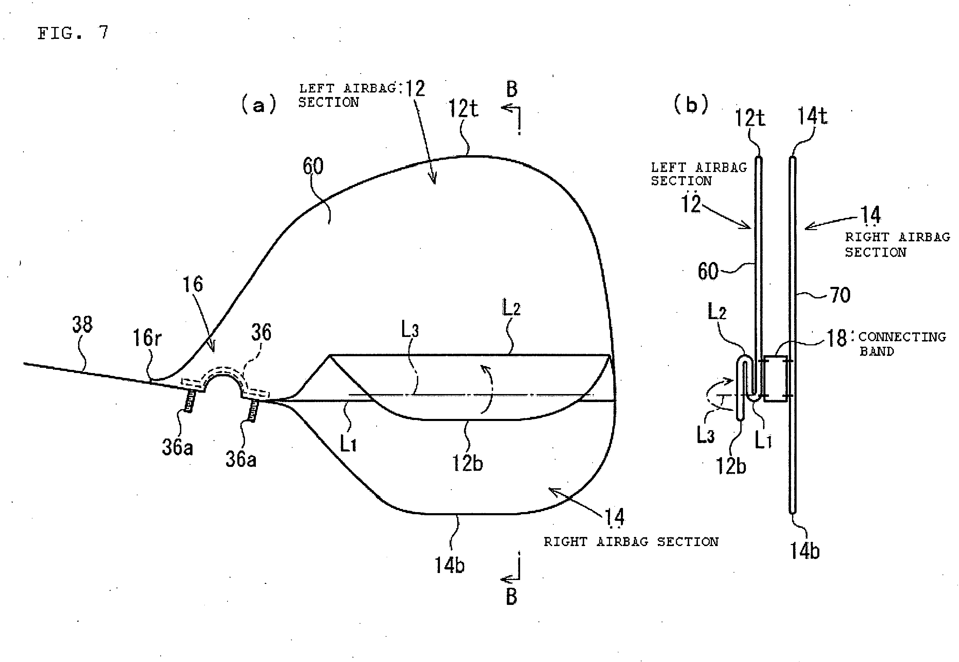

Next, as shown in Figs. 6 and 7, a portion closer to the lower edge 12b than the folding line L₂ is folded back downwardly along a folding line L₂ that extends parallel to the folding line L₁ with a predetermined spacing on the lower edge 12b side (on the upper side) of the folding line L₁ so that the portion is overlapped with the outside (the side opposite to the remaining right airbag section 14). At this time, the position of the folding line L₂ is determined, for example, by placing a ruler or a plate, etc. having a predetermined width along the folding line L₁. Similar to this, the following folding lines L₃ to L₇ are also determined by placing a ruler or a plate, etc. having a predetermined width along a previous folding line.

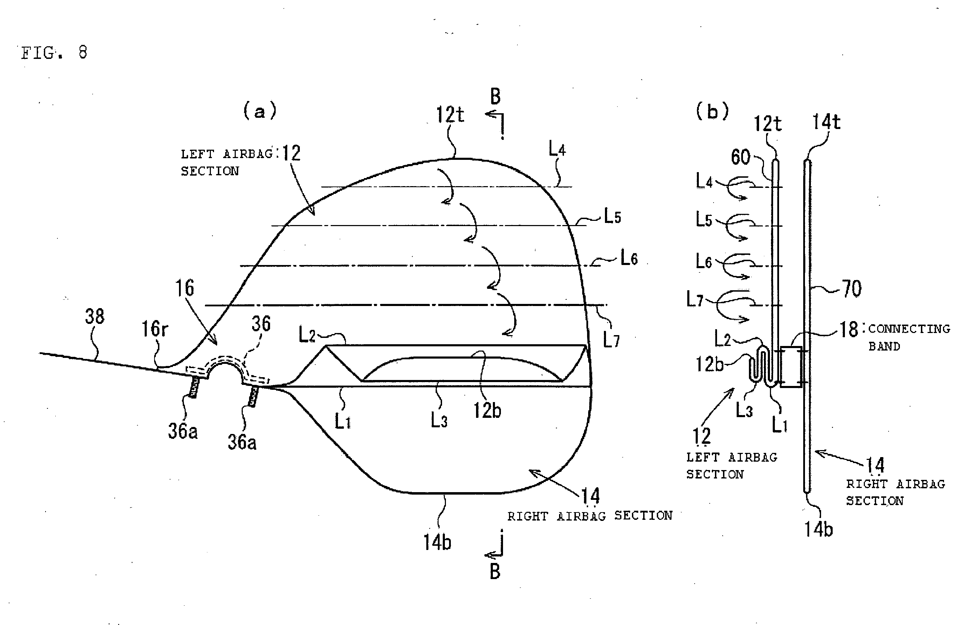

Next, as shown in Figs. 7 and 8, the portion that protrudes downwardly from the folding line L₁ is folded back upwardly after the second folding. At this time, a portion closer to the lower edge 12b than the folding line L₃ is folded back upwardly so as to be overlapped with the outside along a folding line L₃ that extends parallel to the folding line L₂ with a predetermined spacing (in this embodiment, the spacing that is narrower than the spacing between the folding line L₂ and the folding line L₁) on the lower edge 12b side (on the lower side) of the folding line L₂.

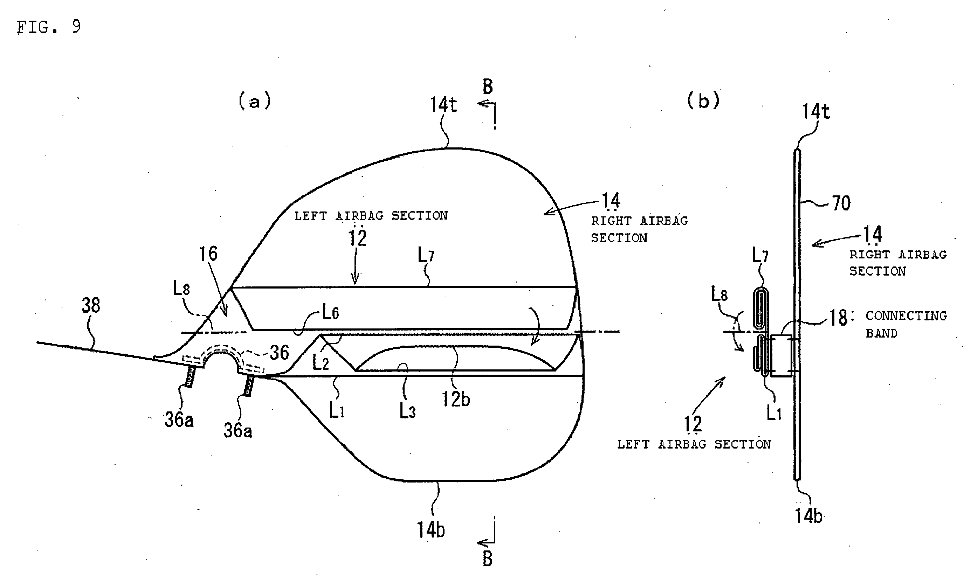

Next, as shown in Figs. 8 to 9, a portion of the left airbag section 12 (an upper airbag section) closer to an upper edge 12t than the connecting band 18 is folded back toward the left outside panel 60 sequentially along folding lines L₄, L₅, ···, (only folding lines up to L₇ are shown in Fig. 8) that extend parallel to the folding line L₁ by a predetermined width downwardly from the upper edge 12t, resulting in an elongated folded roll. In this embodiment, the spacing of the folding lines L₄ to L₇ is set such that, when the upper folded roll reaches a portion near an upper portion of the lower folded body as shown in Fig. 9, its vertical width becomes approximately equal to the vertical width of the lower folded body.

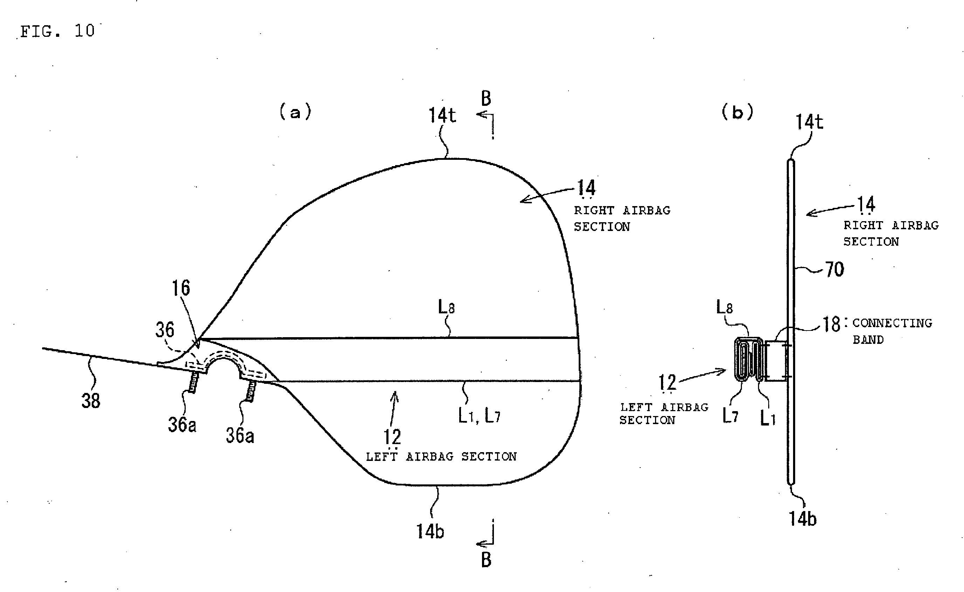

Thereafter, as shown in Figs. 9 and 10, the upper folded roll is folded back downwardly along a line L₈, that is located between the folded roll and the lower folded body and extends parallel to the line L₁, so as to be overlapped with the outside of the lower folded body.

In addition, the roll folding may be performed, for example, by winding the upper airbag section around a predetermined width of a band-like plate from the upper edge 12t. In this case, the upper airbag section may be wound around a band-like plate and roll-folded. The resulting folded roll may be overlapped with the outside of the lower folded body. The band-like plate may be then pulled out of the folded roll. Thus, the folding work of the upper airbag section can be efficiently performed.

The right airbag section 14 is also primarily folded through the process similar to the left airbag section 12. Fig. 11 shows that the primary folding of the left airbag section 12 and the right airbag section 14 has been completed. In addition, in Figs. 5 to 10, reference numerals 14b and 14t represent a lower edge and an upper edge, respectively, of the right airbag section 14.

The vertical width of the primary folded bodies of the left airbag section 12 and the right airbag section 14 is set in accordance with the width of the case 40 to receive the airbag 10.

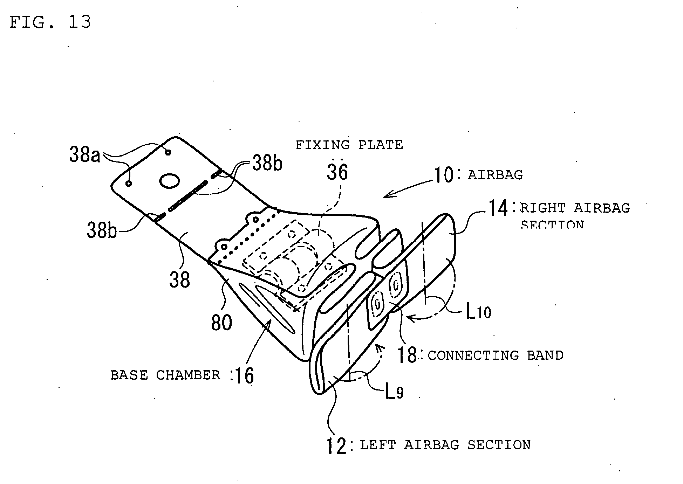

Next, as shown in Figs. 12 and 13, in the primary folded bodies of the left airbag section 12 and the right airbag section 14 that are long in forward and rearward directions, portions closer to the leading ends of the primary folded bodies than the connecting band 18 are separated from each other to the right and left in the shape of open legs, and portions closer to rear ends of the primary folded bodies than the connecting band 18 are folded in a accordion fashion (in a zigzag fashion) so as to have a reduced longitudinal width. Next, as shown in Figs. 13 and 14, the portions of the airbag sections 12 and 14 closer to the leading ends than the connecting band 18 are folded back to the front of the connecting band 18 along the vertical folding lines L₉ and L₁₀, respectively, that are located in the middle of the portions closer to the leading ends. As a result, a secondary folded body shown in Fig. 13 is formed.

The primary folding method and the secondary folding method of the left airbag section 12 and the right airbag section 14 are not limited to the above description.

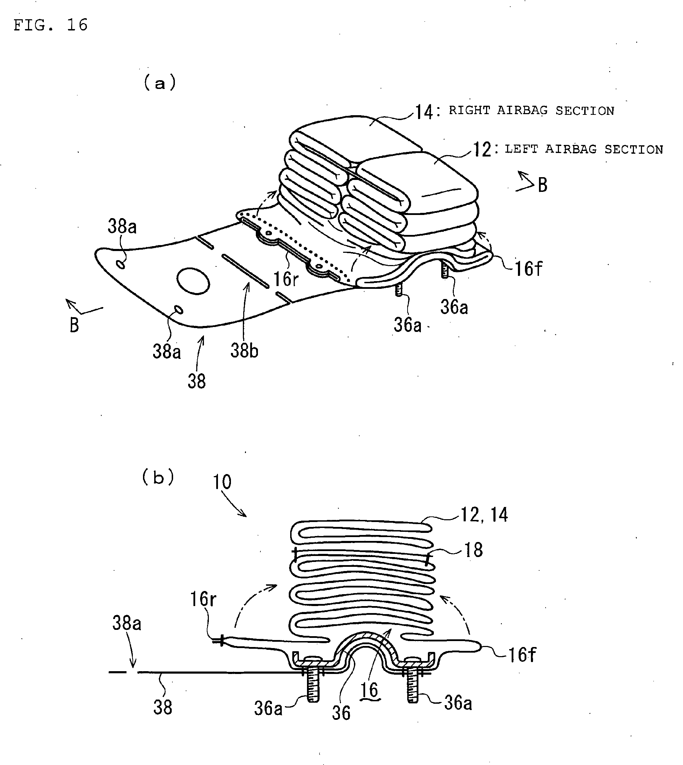

Next, as shown in Figs. 14 to 16, the base panel 80 is flattened so that the base chamber 16 becomes a so-called "beaten state," and the secondary folded body of the left airbag section 12 and the right airbag section 14 is placed on the flattened base panel. As a result, as shown in Fig. 16(b), the base chamber 16 and the secondary folded body overlap the fixing plate 36. Fig. 14 shows a state of the base panel 80 before being flattened, Fig. 15 shows a state of the base panel 80 while being flattened, and Fig. 16 shows a state of the base panel after being flattened.

When the base panel 80 is flattened, as shown in Fig. 15(b), the portion between the front edges 83 and 84 of the flaps 80D and 80E and a rear edge of the gas introducing port 90 of the base panel 80 are loosened. As indicated by the arrow R in Fig. 15(b), a rear end 16r of the base chamber 16 is pulled rearwardly, and the base chamber 16 is pulled out rearwardly by the loosened distance.

When the rear end 16r is pulled rearwardly, the base panel 80 remains loosened between the rear end 16r and the flap front edges 83 and 84 (flaps 80D and 80E) even if a portion between the rear end 16r and the rear edge of the gas introducing port 90 is stretched without looseness. Consequently, in this embodiment, as shown in Fig. 16(b), the middle portions of the flaps 80D and 80E are introduced into the space below the secondary folded body by the loosened distance so that the portion pulled out rearwardly of the secondary folded body extends flatly. Except for this operation, the flaps 80D and 80E may be folded in a zigzag pattern and overlapped with the rear end 16r, for example, by chucking out the middle portions of the straps 80D and 80E rearwardly by the loosened distance.

In addition, since looseness is also caused in the portion between the bottom front edge 80f and the front edge of the gas introducing port 90 of the base chamber 16, the base chamber 16 is also pulled out forwardly by pulling a front end 16f of the base chamber 16 forward as indicated by the arrow F. In this case, since the length of the base panel 80 from the rear edge of the gas introducing port 90 to the flap front edges 83 and 84 is larger than the length of the base panel 80 from the front edge of the gas introducing port 90 to the bottom front edge 80f, the length of the base chamber 16 that is pulled out forward (in the F-direction) becomes larger than the length of the base chamber 16 that is pulled out rearwardly (in the R-direction). It should be noted herein that pull-out of the front end 16f toward a passenger may be omitted.

When the base panel 80 is flattened, looseness is also caused in the left lateral face 80A and the right lateral face 80C of the panel 80. In this embodiment, the left lateral face 80A and the right lateral face 80C are respectively folded into the space below the secondary folded body.

Thereafter, the pulled-out portions of the base chamber 16 closer to the rear end 16r and the front end 16f are respectively folded back upwardly and overlapped with the rear lateral faces (the side opposite to a passenger) and the front lateral face (the passenger side) of the secondary folded body.

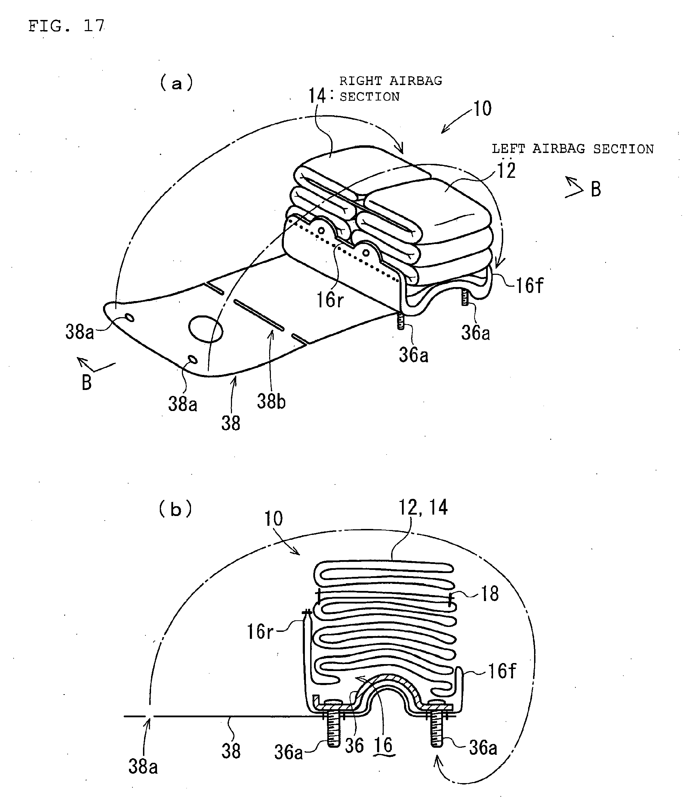

Thereafter, as shown in Figs. 17 and 18, the protector cloth 38 is pulled forwardly around the folded body of the airbag 10 such that it is covered on the folded body. Then, the stud bolts 36a extending from the bottom of the base chamber 16 are inserted through the insertion holes 38a, respectively, of the protector cloth 38 at its leading end, and thereby the protector cloth 38 is caught by the stud bolts 36a. As a result, the folded body of the airbag 10 is wrapped (retained in shape) by the protector cloth 38, completing the folding of the airbag 10.

In this embodiment, as described above, since a first folding is performed along the folding line L₁ which connects the lower edge of the connecting band 18 with the lower edge of the fixing plate 36 at its front end when the left airbag section 12 and the right airbag section 14 are primarily folded, the position of the first fold is determined to be uniform. Also, the folding in the primary folding after the first folding can be performed parallel to the first folding line L₁ which serves as a reference line.

If a vehicle equipped with the airbag device 1 encounters an emergency situation, the inflator 34 operates to discharge gas. As a result, gas is discharged into the base chamber 16 from the inflator 34. The gas from the inflator 34 flows into the left airbag section 12 and the right airbag section 14 from the base chamber 16. Then, this gas causes the left airbag section 12 and the right airbag section 14 to inflate on the left and right sides, respectively, in front of a passenger.

When the airbag 10 begins to be inflated, the protector cloth 38 is ruptured along the slits 38b due to the inflation pressure of the airbag 10, thereby releasing the folds of the airbag 10. Next, the base chamber 16 is inflated, which in turn pushes the secondary folded body of the left airbag section 12 and the right airbag section 14 out of the case 40 while pushing the door 2a of the inflator open.

In the airbag device 1, when the base chamber 16 is folded, the portion of the base chamber 16 closer to its rear end 16r is pulled out rearwardly and overlapped with the rear lateral face of the secondary folded body. Thus, when the base chamber 16 is inflated, as shown in Fig. 20, the rear end 16r swells greatly on the rear side (vehicle front side) of the secondary folded body. Thereby, the secondary folded body is pushed out by the inflated rear end 16r so that the left airbag section 12 and the right airbag section 14 are smoothly deployed toward the passenger.

In this embodiment, since the portion of the base chamber 16 closer to its front end 16f is also pulled out forwardly, as shown in the drawing, the portion of the base member closer to the front end 16f is inflated so as to support the secondary folded body on the front bottom of the secondary folded body.

Thereafter, the left airbag section 12 and the right airbag section 14 are inflated to the left and right, respectively, in front of a passenger, whereby the left airbag section 12 receives the left chest of a passenger and the right airbag section 14 receives the right chest of the passenger. Hard and strong ribs exist in the left and right chests. The left airbag section 12 and the right airbag section 14 receive and absorb an impact on the passenger through the ribs. Also, the space 13 exists between the leading ends of the inflated left and right airbag sections 12 and 14 so that the breastbones in the center of the passenger's chest faces the space 13. Thus, if the passenger's body rushes into the airbag 10, the breastbone region of the chest does not receive reaction force too much from the airbag 10. As a result, a burden on the breastbones becomes small.

In this embodiment, in a state in which the airbag 10 is inflated, the spacing between the front most ends of the left airbag section 12 and the right airbag section 14 is set to 150 to 450 mm. Thus, the inflated left airbag section 12 directly faces a central region of the left chest, and the inflated left airbag section 14 directly faces a central region of the right chest. As a result, the region of the ribs of the upper half of the passenger's body is reliably and securely received by the airbag 10.

The above embodiment is just an example, and the invention is not limited to the above embodiment.

In the above embodiment, the airbag 10 comprises four panels including the inside panel 50, the left outside panel 60, the right outside panel 70, and the base panel 80. However, the panel structure of the airbag of the invention is not limited thereto. For example, in the above embodiment, each of the outside panels 60 and 70 and the base panel 80, which are separately provided, may be sewn together, thereby forming an outer peripheral surface of the airbag from the left airbag section 12 to the right airbag section 14. Otherwise, each of the outside panels and the base panel are fabricated as one (continuous) panel from the beginning.

The above embodiment illustrates an application of the invention for a front passenger airbag device of automobiles. However, the invention is naturally applicable not only to airbag devices for passengers other than the front passenger but also to airbag devices for receiving passengers of highspeed mobile objects other than the automobile.

## Claims

1. An airbag device comprising a folded airbag, a case accommodating the airbag, and an inflator for inflating the airbag, the airbag on a leading-end side being inflated in a direction away from a base-end side of the airbag by gas discharged from the inflator disposed on the base-end side,
the airbag including a base end part having a gas introducing port that receives gas from the inflator, a left airbag section that is connected to the base end part and inflated on the left in front of a passenger, and a right airbag section that is connected to the base end part and inflated on the right in front of the passenger,
wherein the airbag is made by primarily folding the left airbag section and the right airbag section to form primary folded bodies that are elongated in forward and rearward directions, then secondarily folding the primary folded bodies so as to have a reduced longitudinal width to form a secondary folded body, and thereafter folding the base end part, and
a portion of the base end part on the side opposite to the passenger is pulled out in a direction opposite to the passenger farther than the secondary folded body and folded.

2. The airbag device according to Claim 1,
wherein a portion of the base end part on the passenger side is pulled out toward the passenger from than the secondary folded body and folded, and
the pulled-out distance in the direction opposite to the passenger is larger than the pulled-out distance toward the passenger.

3. The airbag device according to Claim 1 or 2,
wherein the left airbag section and the right airbag section have leading ends non-connected to each other, whereby a space to be opened toward the passenger is formed between the leading ends of the left airbag section and the right airbag section when inflated, and
middle portions of the left airbag section and the right airbag section in their inflation direction are connected to each other by a connecting part.
